# EUROPÄISCHE PATENTSCHRIFT

(11) **EP 1 711 302 B1**
(45) Veröffentlichungstag und Bekanntmachung des Hinweises auf die Patenterteilung: **13.06.2007**
(21) Anmeldenummer: 05706720.9
(22) Anmeldetag: 28.01.2005
(51) Int. Cl.: B23K 26/14, F01D 5/30

(54) **VERFAHREN ZUM VERBINDEN VON BAUTEILEN**
METHOD FOR CONNECTING COMPONENTS
PROCEDE DE LIAISON DE PIECES

(30) Priorität: 07.02.2004 DE 102004006154
(43) Veröffentlichungstag der Anmeldung: 18.10.2006
(73) Patentinhaber: MTU Aero Engines GmbH, 80995 München (DE)
(72) Erfinder: MEIER, Reinhold, 84405 Dorfen (DE)
(86) Internationale Anmeldenummer: PCT/DE2005/000132
(87) Internationale Veröffentlichungsnummer: WO 2005/075140

(56) Entgegenhaltungen:
- EP-A- 0 949 037
- DE-A1- 3 813 157
- DE-A1- 19 618 256
- DE-A1- 19 643 434
- DE-C1- 19 932 415
- US-A1- 2003 213 786

## Beschreibung

Die Erfindung betrifft ein Verfahren zum Verbinden von dynamisch belasteten Bauteilen, insbesondere von Gasturbinenbauteilen, gemäß dem Oberbegriff des Patentanspruchs 1.

Dynamisch hochbelastete Bauteile von insbesondere Gasturbinen werden in der Regel als Schmiedeteile ausgeführt, da,Schmiedeteile gegenüber Gussteilen eine höhere Festigkeit aufweisen. Zur Verbindung von derartigen, dynamisch belasteten Bauteilen wird nach dem Stand der Technik das sogenannte Reibschweißen eingesetzt, insbesondere das Rotationsreibschweißen oder das lineare Reibschweißen. Mithilfe des Reibschweißens lassen sich für den Verbindungsbereich zwischen zwei Bauteilen Festigkeitswerte erzielen, die den Festigkeitswerten des Schmiedewerkstoffs entsprechen. Das Rotationsreibschweißen gehört zu der Gruppe der sogenannten Pressschweißverfahren, die allesamt über den Nachteil verfügen, dass dieselben auf aufwendigen Maschinen und unter Einsatz teurer Sonderbetriebsmittel durchgeführt werden müssen. Das Verbinden von dynamisch belasteten Bauteilen mittels Reibschweißen oder Pressschweißen ist demnach aufwendig und teuer. Auch bildet sich beim Reibschweißen oder Pressschweißen eine Schweißwulst (sogenannter Flash) aus, der eine aufwendige Nachbearbeitung erforderlich macht. Die aus dem Stand der Technik bekannten Schmelzschweißverfahren können jedoch zur Verbindung von dynamisch belasteten Bauteilen nicht verwendet werden, da die Festigkeit von durch Schmelzschweißen hergestellten Verbindungen für dynamisch hochbelastete Bauteile nicht ausreichend ist.

Hiervon ausgehend liegt der vorliegenden Erfindung das Problem zu Grunde, ein neuartiges Verfahren zum Verbinden von dynamisch belasteten Bauteilen, insbesondere von Gasturbinenbauteilen, zu schaffen.

Dieses Problem wird durch ein Verfahren zum Verbinden von dynamisch belasteten Bauteilen, insbesondere von Gasturbinenbauteilen, gemäß Patentanspruch 1 gelöst. Erfindungsgemäß werden mindestens zwei miteinander zu verbindende Bauteile durch Laserpulverauftragschweißen miteinander verbunden.

Im Sinne der hier vorliegenden Erfindung wird vorgeschlagen, dynamisch belastete Bauteile mithilfe des Laserpulverauftragschweißens zu verbinden. Nach dem Stand der Technik wird das Laserpulverauftragschweißen lediglich zum Aus der US 2003/213786 1 ist auch ein Verfahren zum Verbinden gemäß dem Oberbegriff des Anspruchs 1 bekannt. Herstellen von Bauteilen bzw. Neuteilen im Wege eines sogenannten Rapid Manufacturing Prozesses verwendet. Aus der US 2003/2137861 ist auch ein Verfahren zum Verbinden gemäß dem Oberbegriff des Anspruchs 1 bekannt. Die hier vorliegende Erfindung schlägt erstmals vor, das Laserpulverauftragschweißen zur Verbindung dynamisch belasteter Bauteile zu verwenden. Der Erfindung liegt die Erkenntnis zugrunde, dass mit dem Laserpulverauftragschweißen Verbindungen erzielt werden können, deren Festigkeitswerte höher sind, als die Festigkeitswerte der geschmiedeten Bauteile. Dies liegt unter anderem darin begründet, dass beim Laserpulverauftragschweißen der aufgeschmolzene Werkstoff rasch abkühlt und gerichtet erstarrt. Das sich dabei ausbildende Gefüge der Schweißnaht ist feinkörnig. Die so hergestellte Verbindung verfügt demnach über herausragende Festigkeitseigenschaften und ist für die Verbindung von dynamisch belasteten Bauteilen besonders geeignet. Weitere Vorteile der Erfindung sind die hohe Flexibilität des Laserpulverauftragschweißens sowie ein geringer Vorbehandlungsaufwand sowie Nachbehandlungsaufwand der Schweißnaht.

Nach einer vorteilhaften Weiterbildung der Erfindung werden die miteinander zu verbindenden Bauteile relativ zueinander ausgerichtet und in dieser ausgerichteten Position durch eine Hilfsschweißnaht miteinander verbunden. Nach dem Erzeugen der Hilfsschweißnaht wird die eigentliche Verbindung der Bauteile durch Laserpulverauftragschweißen hergestellt.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine stark schematisierte Ansicht von zwei mit dem erfindungsgemäßen Verfahren verbundenen, dynamisch belasteten Bauteilen; und
- Fig. 2: eine stark schematisierte Ansicht von zwei weiteren mit dem erfindungsgemäßen Verfahren verbundenen, dynamisch belasteten Bauteilen.

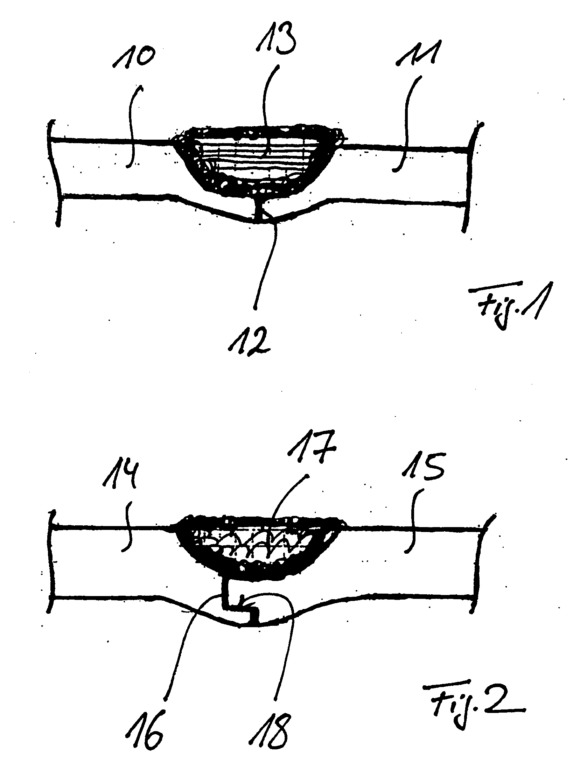

Nachfolgend wird die hier vorliegende Erfindung unter Bezugnahme auf Fig. 1 und 2 in größerem Detail beschrieben.

Fig. 1 zeigt Ausschnitte von zwei miteinander zu verbindenden Bauteilen, wobei die beiden Bauteile als Rotorscheiben eines Gasturbinenrotors ausgebildet sind, die an axial verlaufenden Flanschen 10, 11 miteinander zu verbinden sind.

Im Sinne des erfindungsgemäßen Verfahrens werden die beiden Bauteile an den Flanschen 10, 11 dadurch miteinander verbunden, dass die Bauteile 10, 11 zuerst relativ zueinander ausgerichtet werden und in dieser ausgerichteten Position durch eine Hilfsschweißnaht 12 provisorisch miteinander verbunden werden. Im Anschluss an das Erzeugen der Hilfsschweißnaht 12 werden die beiden Bauteile dann durch Laserpulverauftragschweißen dauerhaft miteinander verbunden, wobei eine durch Laserpulverauftragschweißen hergestellte Schweißnaht in Fig. 1 mit der Bezugsziffer 13 gekennzeichnet ist.

Wie Fig. 1 entnommen werden kann, bilden die Flansche 10, 11 im Bereich der miteinander zu verbindenden Enden derselben eine Mulde, in welche zur Herstellung der Schweißnaht 13 mittels Laserpulverauftragschweißen Werkstoff für die Schweißnaht 13 eingebracht werden kann. Das zum Laserpulverauftragschweißen verwendete Pulver ist dabei an die Materialzusammensetzung der miteinander zu verbindenden Bauteile angepasst.

Beim Laserpulverauftragschweißen wird das Pulver aufgeschmolzen und unterliegt einer raschen Abkühlung, sodass der aufgeschmolzene Werkstoff beim Abkühlen gerichtet erstarrt. Es bildet sich ein feinkörniges Gefüge im Bereich der Schweißnaht 13 aus. Die Schweißnaht 13 verfügt demnach über Festigkeitswerte, die oberhalb der Festigkeitswerte des Grundwerkstoffs der miteinander zu verbindenden Bauteile liegen. Durch entsprechende Kühlung kann das Abkühlen des Werkstoffs beim Laserpulverauftragschweißen und damit der Festigkeitswert der sich einstellenden Schweißnaht 13 beeinflusst werden.

Wie Fig. 1 entnommen werden kann, ragt die durch Laserpulverauftragschweißen hergestellte Schweißnaht 13 geringfügig über die Abmessungen der Flasche 10 hervor. Dieser über die Flansche 10 vorstehende Abschnitt der Schweißnaht 13 kann im Sinne einer Nachbearbeitung der Schweißnaht 13 abgetragen werden. Da jedoch mit dem Laserpulverauftragschweißen Material gezielt und hochgenau zur Bildung der Schweißnaht 13 aufgetragen werden kann, ist der Nachbearbeitungsaufwand gering.

Fig. 2 zeigt zwei weitere miteinander zu verbindende Bauteile, nämlich zwei Rotorscheiben, die im Bereich der axial verlaufenden Flansche 14 und 15 miteinander zu verbinden sind. Bei der Herstellung der Verbindung der Bauteile an den Flanschen 14, 15 gemäß Fig. 2 wird ebenso wie im Ausführungsbeispiel der Fig. 1 so vorgegangen, dass die beiden Bauteile zuerst relativ zueinander ausgerichtet und in dieser ausgerichteten Position mit Hilfe einer Hilfsschweißnaht 16 miteinander verbunden werden. Nach dem Herstellen der Hilfsschweißnaht 16 erfolgt die eigentlichen Verbindung der Bauteile mithilfe einer Schweißnaht 17, die durch Laserpulverauftragschweißen hergestellt wird.

Das Ausführungsbeispiel der Fig. 2 unterscheidet sich vom Ausführungsbeispiel der Fig. 1 lediglich darin, dass die Ausrichtung der Bauteile dadurch erleichtert wird, dass im Bereich der miteinander zu verbindenden Enden der Flasche 14 und 15 eine stufenförmige bzw. treppenförmige Zentrierlippe 18 vorhanden ist. Die Zentrierlippe 18 dient der erleichterten Ausrichtung der Bauteile relativ zueinander.

Es sei darauf hingewiesen, dass auch eine Schweißnaht 13 mit einem gradierten Aufbau hergestellt werden kann, indem zum Beispiel der zum Laserpulverauftragschweißen verwendete Werkstoff angepasst wird oder die Schweißbedingungen, wie zum Beispiel die Temperatur, verändert werden.

Mithilfe der hier vorliegenden Erfindung können Verbindungen an dynamisch hochbelasteten Bauteilen kostengünstig hergestellt werden, ohne die beim Reibschweißen erforderliche, hohe Krafteinwirkung. Daher kann auf aufwendige Apparaturen, Maschinen und Sonderbetriebsmittel verzichtet werden. Das Laserpulverauftragschweißen ist sehr flexibel und erfordert nur eine geringe Nachbearbeitung der Schweißnaht. Es können Festigkeitswerte der Schweißnaht erzielt werden, die oberhalb der Festigkeitswerte des Basiswerkstoffs der miteinander zu verbindenden Bauteile liegen.

## Patentansprüche

1. Verfahren zum Verbinden von dynamisch belasteten Bauteilen, insbesondere von Gasturbinenbauteilen, wobei mindestens zwei miteinander zu verbindende Bauteile (10, 11; 14, 15) durch Laserpulverauftragschweißen miteinander verbunden werden,
**dadurch gekennzeichnet,**
**dass** die miteinander zu verbindenden Bauteile (10, 11; 14, 15) relativ zueinander ausgerichtet und in dieser ausgerichteten Position durch eine Hilfsschweißnaht (12; 16) miteinander verbunden werden.

2. Verfahren nach Anspruch 1,
**dadurch gekennzeichnet,**
**dass** die Hilfsschweißnaht (12; 16) durch Laserschweißen oder Elektronenstrahlschweißen hergestellt wird.

3. Verfahren nach Anspruch 1 oder 2,
**dadurch gekennzeichnet,**
**dass** nach dem Erzeugen der Hilfsschweißnaht die eigentliche Verbindung der Bauteile (10. 11; 14, 15) durch Laserpulverauftragschweißen (13, 17) hergestellt wird.

4. Verfahren nach einem oder mehreren der Ansprüche 1 bis 3,
**dadurch gekennzeichnet,**
**dass** mindestens zwei Rotorscheiben eines Verdichterrotors oder eines Turbinenrotors an in axialer Richtung verlaufenden Flanschen miteinander verbunden werden.

## Claims

1. A method for connecting dynamically loaded components, in particular gas-turbine components, at least two components (10, 11; 14, 15) that are to be connected together being connected together by means of laser powder build-up welding, **characterised in that** the components (10, 11; 14, 15) that are to be connected together are aligned in relation to each other and in this aligned position are connected together by means of an auxiliary weld seam (12; 16).

2. A method according to claim 1, **characterised in that** the auxiliary weld seam (12; 16) is produced by laser welding or electron-beam welding.

3. A method according to claim 1 or 2, **characterised in that** after the auxiliary weld seam has been produced the actual connection of the components (10, 11; 14, 15) is established by means of laser powder build-up welding (13, 17).

4. A method according to one or more of claims 1 to 3, **characterised in that** at least two rotor discs of a compressor rotor or a turbine rotor are connected together at flanges extending in the axial direction.

## Revendications

1. Procédé de liaison de composants chargés dynamiquement, en particulier de composants de turbines à gaz, selon lequel on relie entre eux au moins deux composants à relier (10, 11 ; 14, 15) par soudage laser d'apport de poudre,
**caractérisé en ce que**
les composants à relier entre eux (10, 11 ; 14, 15) sont orientés les uns par rapport aux autres et, dans cette position orientée, ils sont reliés entre eux par un cordon de soudure auxiliaire (12 ; 16).

2. Procédé selon la revendication 1,
**caractérisé en ce que**
le cordon de soudure auxiliaire (12 ; 16) est réalisé par soudage au laser ou par soudage par bombardement électronique.

3. Procédé selon la revendication 1 ou la revendication 2,
**caractérisé en ce qu'**
après avoir réalisé le cordon de soudure auxiliaire, la liaison proprement dite des composants (10, 11 ; 14, 15) est réalisée par soudage laser d'apport de poudre (13, 17).

4. Procédé selon l'une quelconque ou plusieurs des revendications 1 à 3,
**caractérisé en ce qu'**
on relie entre eux au moins deux disques de rotor d'un rotor de compresseur ou de turbine, sur des flasques dirigés axialement.
